# EUROPÄISCHE PATENTSCHRIFT

(11) **EP 3 059 276 B1**
(45) Veröffentlichungstag und Bekanntmachung des Hinweises auf die Patenterteilung: **20.12.2017**
(21) Anmeldenummer: 16158974.2
(22) Anmeldetag: 06.05.2013
(51) Int. Cl.: C08J 5/24, D21H 17/33, D21H 27/28, B44C 5/04, B32B 29/06

(54) **VERFAHREN ZUR HERSTELLUNG EINES DEKORIERTEN BLATTES UND DESSEN VERWENDUNG**
PROCESS FOR MANUFACTURING A DECORATIVE SHEET AND ITS USE
PROCÉDÉ DE FABRICATION D'UNE FEUILLE DÉCORATIVE ET SON UTILISATION

(30) Priorität: 10.05.2012 DE 102012207845
(43) Veröffentlichungstag der Anmeldung: 24.08.2016
(62) Teilanmeldung aus: 13721337.7
(73) Patentinhaber: Surface Technologies GmbH & Co. KG, 15837 Baruth (DE)
(72) Erfinder: Hoff, Egon, 56869 Mastershausen (DE)
(74) Vertreter: Michalski Hüttermann & Partner Patentanwälte mbB

(56) Entgegenhaltungen:
- EP-A1- 1 319 524
- EP-A2- 0 745 478
- DE-A1-102004 034 790
- DATABASE WPI Week 199739 Thomson Scientific, London, GB; AN 1997-420800 XP002711478, -& JP H09 188997 A (TOPPAN PRINTING CO LTD) 22. Juli 1997 (1997-07-22)
- DATABASE WPI Week 197552 Thomson Scientific, London, GB; AN 1975-85476W XP002711479, & JP S50 86571 A (IBIGAWA ELECTRIC KK) 11. Juli 1975 (1975-07-11)
- DATABASE WPI Week 200141 Thomson Scientific, London, GB; AN 2001-387240 XP002758626, -& JP 2001 129957 A (DAINIPPON PRINTING CO LTD) 15. Mai 2001 (2001-05-15)

## Beschreibung

Die Erfindung betrifft ein Verfahren zur Herstellung eines dekorierten Blattes, wie es bei der Herstellung von dekorativen Laminaten mit anderen Schichten, beispielsweise Trägerschichten aus Holz, Holzwerkstoffen, Kunststoffen sowie Deck- oder Schutzschichten Verwendung findet. Solche dekorativen Laminate werden beispielsweise als Wand- oder Bodenbeläge und beim Möbelbau verwendet. Die Erfindung betrifft außerdem die Verwendung des dekorierten Blattes zur Herstellung eines dekorativen Laminats.

Bei solchen Laminaten kann das Dekor einen anderen Werkstoff imitieren, beispielsweise Holz, Keramik, Natur- oder Kunststein, oder künstlerische oder praktische Gesichtspunkte berücksichtigen. Gewöhnlich wird das Dekor durch eine mehr oder weniger durchsichtige Duroplastschicht vor Verschleiß geschützt. Es ist auch üblich, die Oberfläche dieser Deckschicht mit einer Struktur zu versehen, die in räumlicher Beziehung zum Dekor steht, die Oberflächenstruktur des imitierten Werkstoffs nachbildet und als Synchronpore bezeichnet wird.

Das Dekor wird herkömmlich in Form eines bedruckten oder anders mit einem Muster versehenen Papiers oder anderen Cellulosevlieses realisiert, das mit einem aushärtbaren Lack oder Kunstharz imprägniert ist und zwischen dem Träger und einer verschleißhindernden äußeren Deckschicht angeordnet wird. Üblicherweise erfordert das Herstellen des imprägnierten Dekorpapiers gesonderte Arbeitsgänge des Druckens und Imprägnierens, die meist in Betrieben außerhalb der eigentlichen Laminatherstellung durchgeführt werden und einen erheblichen Kostenfaktor darstellen. Es ist außerdem erforderlich, dass der Imprägnierstoff des Dekorpapiers mit dem Lack oder Kunstharz der Deckschicht verträglich ist, was insbesondere beim Zusammentreffen von Lack und Kunstharz nicht vorausgesetzt werden kann.

Ein weiteres Problem dieser Technologie besteht darin, dass beim Imprägnieren des Dekorpapiers dieses eine Änderung der Abmessung erfährt, die im weiteren Verfahren berücksichtigt werden muss, wenn die räumliche Beziehung zwischen Dekor und Oberflächenstruktur (Synchronpore) erhalten bleiben soll. Dies gestaltet sich insbesondere dann schwierig, wenn das Produkt häufig gewechselt wird.

Mit Aminoplast imprägnierte Dekorpapiere sind auch empfindlich gegen Wasser, das unter Umgehung der Deckschicht von einer Schnittkante her in das Laminat eindringt. Für Anwendungen in Nassbereichen müssen solche Laminatelemente auch an den Seitenkanten speziell gegen eindringendes Wasser versiegelt werden.

Schließlich verlieren die Dekorpapiere durch das Imprägnieren häufig ihre Flexibilität und können nicht mehr aufgerollt, sondern müssen in Form von Blättern gehandhabt werden, die auf das Maß des Trägers zugeschnitten sind.

DE 17 04 598 A beschreibt ein Verfahren zur kontinuierlichen Herstellung faserverstärkter Kunststofffolien, wobei Faservliese mit einem Kunstharz mit selbstvernetzenden Gruppen imprägniert und anschließend einer Wärme- und Druckbehandlung unterworfen werden.

DE 101 34 302 C1 offenbart ein Verfahren zur Herstellung eines Vorimprägnats für die Produktion von dekorativen Laminaten, wobei auf ein nicht gestrichenes Papier ein thermisch härtbares Harz aufgebracht und das Vorimprägnat auf eine Restfeuchte von etwa 3 % eingestellt wird, wobei das Harz unvernetzt bleibt.

WO 2010/089086 A1 beschreibt ein Verfahren zur Herstellung von Dekorpapier, wobei das Papier bedruckt wird und danach eine aliphatische, polycarbonathaltige anionische Polyurethandispersion aufgebracht wird. Danach wird das Papier mit einem Aminoplastharz imprägniert. Hierdurch soll Imprägnierharz eingespart, das Wachstum des Papieres beim Imprägnieren mit Aminopiastharz vermindert und die Lichtechtheit des Dekorpapiers verbessert werden.
Die Erfindung stellt sich die Aufgabe, ein Verfahren zur Herstellung eines dekorierten Blattes aus einem Cellulosevlies anzugeben, welches eine vollständige und wasserbeständige Imprägnierung der Zellulose ergibt und auf eine gegenüber dem Stand der Technik einfachere Weise ausgeführt werden kann.
Diese Aufgabe wird durch ein Verfahren nach dem Hauptanspruch gelöst.
Es wird somit ein Verfahren zur Herstellung eines dekorierten Blattes vorgeschlagen, umfassend die Schritte
- Bereitstellung eines unbedruckten Vliesstoffes aus Zellulosefasern,
- Imprägnieren des Vliesstoffs mit einer wässrigen Dispersion eines durch UV-Strahlung vernetzbaren Polymers,
- Entfernen des wässrigen Dispersionsmediums aus dem imprägnierten Vliesstoff durch Trocknung,
- Aufkleben des getrockneten imprägnierten Vliesstoffs auf eine Trägerplatte,
- Drucken eines Dekors auf eine Seite des getrockneten imprägnierten Vliesstoffs,
- Härten des Polymers im Vliesstoff durch Vernetzung mittels UV-Bestrahlung,
so dass der getrocknete imprägnierte Vliesstoff auf der Trägerplatte befestigt wird vor dem Drucken des Dekors, und das Dekor auf den imprägnierten und getrockneten Vliesstoff gedruckt wird vor dem Härten des Polymers im Vliesstoff durch Vernetzen mittels UV-Bestrahlung. Es wurde gefunden, dass bei der Verwendung der wässrigen Dispersion eines durch UV-Strahlung vernetzbaren Polymers als Imprägnierungsmittel, Trocknen des Imprägnats und Härten des Polymers durch Vernetzung mittels UV-Bestrahlung auf einfache Weise ein dekoriertes Blatt erhalten werden kann, das keine Dimensionsänderung gegenüber dem ursprünglichen Zellulosevlies aufweist, mit den in anderen Schichten, beispielsweise Deckschichten, des dekorativen Laminats verwendeten Harzen, insbesondere Aminoplasten, verträglich ist und eine gute Bindung eingeht, und das vollständig wasserfest ist. Der erfindungsgemäß verwendete Vliesstoff aus Zellulosefasern enthält bevorzugt außer gegebenenfalls einer geringen Menge Bindemittel für die Stabilisierung des Vlieses keine weiteren Imprägniermittel, sein Flächengewicht liegt im Allgemeinen zwischen 50 und 200 g/m². Besonders bevorzugt ist der Vliesstoff ein Papier. Ein bevorzugter Bereich für das Flächengewicht des Papiers liegt zwischen 70 und 100 g/m². Gut verwendbar sind die auf dem technischen Gebiet der dekorierten Oberflächen bekannten Druckbasispapiere. Diese sind im Allgemeinen nicht imprägniert und können gefärbt sein und Pigmentstoffe enthalten, damit sie die Farbe und Struktur des unbehandelten Trägerwerkstoffs kaschieren.
Der Vliesstoff aus Zellulosefasern wird im erfindungsgemäßen Verfahren in unbedrucktem Zustand imprägniert. In diesem Fall muss vor dem Bestrahlen das Dekor auf den imprägnierten und getrockneten Vliesstoff aufgedruckt werden. Ein Vorteil dieser Ausführungsform besteht darin, dass für das Drucken des Dekors bis zu 50 % weniger Farbe benötigt wird, als beim Bedrucken eines nicht imprägnierten Vliesstoffes. Das beruht möglicherweise darauf, dass die gesamte Druckfarbe an der Oberfläche imprägnierten Vlieses bleibt und nicht ins Innere des Vlieses aufgesaugt wird, wo sie nicht mehr sichtbar ist. Ein weiterer Vorteil des Druckens auf das imprägnierte und getrocknete, aber noch nicht bestrahlte Vlies ist das klarere und schärfere Druckbild. Offenbar neigt die Druckfarbe dabei weniger zum Verlaufen als beim Drucken auf rohes Papier.

Das im erfindungsgemäßen Verfahren verwendete durch UV-Strahlung vernetzbare Polymer liegt in Form einer wässrigen Dispersion vor, die gegebenenfalls geeignete oberflächenaktive Substanzen als Dispergiermittel enthalten kann. Das Polymer kann ein Copolymer sein, das vernetzbare Comonomere, beispielsweise ethylenisch ungesättigte Verbindungen wie Acrylate und Methacrylate umfasst, die auch nach der Polymerisation noch ethylenisch ungesättigte Gruppen aufweisen, beispielsweise als Acrylsäureester mehrwertiger Alkohole.
Bevorzugt umfasst das vernetzbare Polymer neben den ethylenisch ungesättigten Comonomeren Urethaneinheiten, die in bekannter Weise aus Diisocyanaten und Diolen aufgebaut werden können. Brauchbar sind insbesondere anionische Dispersionen.
Weiter bevorzugt sind Polymere, die neben dem vernetzbaren Comonomer und den Urethaneinheiten noch Estereinheiten umfassen. Das Polymer kann als Block-Copolymer vorliegen. Beispielsweise können Polyesterblöcke in das Copolymer eingefügt werden, indem man als Diol ein bevorzugt aliphatisches Polyesterdiol verwendet.
Die erfindungsgemäß verwendete wässrige Dispersion des durch UV-Strahlung vernetzbaren Polymers hat bevorzugt einen Feststoffgehalt von mindestens 35 Gewichtsprozenten. Die Dispersion kann weitere Hilfsmittel enthalten, beispielsweise Entschäumer und Verdickungsmittel. Der Flächenauftrag der Polymerdispersion wird bevorzugt so bemessen, dass sich ein Trockenauftrag von 10-40, besonders bevorzugt 10-20 g/m² Polymer ergibt. Im Allgemeinen erfordern eine höhere Grammatur und ein größeres Porenvolumen des Cellulosevlieses einen höheren Polymerauftrag.
Das Imprägnieren des Vliesstoffes kann mit bekannten Verfahren durchgeführt werden, beispielsweise Eintauchen des Vliesstoffes in die Polymerdispersion. Bevorzugt werden jedoch dosierende Verfahren, die eine präzise Steuerung des Flächenauftrags ermöglichen, beispielsweise Walzenauftrag oder Vorhanggießen. Beim Walzenauftrag wird bevorzugt das Imprägniermittel mit einer Gegendruckwalze in den Vliesstoff hineingedrückt. Möglich ist auch die Anwendung einer Rakeltechnik wie etwa in Papierstrichmaschinen. Bevorzugt wird ein Walzenauftrag unter Verwendung von Walzen aus Edelstahl oder Hartgummi.

Zum Imprägnieren kann die Viskosität der Polymerdispersion mit geeigneten Verdickungsmitteln erhöht werden, beispielsweise mit Mitteln auf Polyurethanbasis.

Nach dem Imprägnieren des Vliesstoffes wird das wässrige Dispersionsmedium durch Trocknen entfernt. Das Trocknen kann auf physikalische Weise, beispielsweise durch Infrarotbestrahlung, erwärmte Luft, beispielsweise in Umluft- oder Düsentrocknern, Mikrowellen, beheizte Walzen oder durch eine Kombination dieser Verfahren erfolgen. Es ist vorteilhaft, wenn dabei die Filmbildungstemperatur des dispergierten Polymers überschritten wird, weil dadurch die Wasserfestigkeit des imprägnierten Vliesstoffes verbessert wird. Zu dem beim Trocknen entfernten wässrigen Dispersionsmedium gehören neben Wasser selbst auch gegebenenfalls vorhandene polare Hilfsdispersionsmittel, wie beispielsweise Alkohole.

Es ist ein besonderer Vorteil des erfindungsgemäßen Verfahrens, dass das imprägnierte Cellulosevlies im getrockneten Zustand biegsam und klebfrei ist, so dass es ohne Probleme aufgerollt und zur weiteren Verwendung gelagert und transportiert werden kann. Bei Bedarf kann das Cellulosevlies in jedem Stadium des erfindungsgemäßen Verfahrens zugeschnitten werden, beispielsweise um es an die Breite der Imprägnier- oder Druckvorrichtung oder an die Maße der für die Herstellung des dekorativen Laminats vorgesehenen Trägerplatte anzupassen.

Das Bedrucken geschieht erfindungsgemäß nach dem Imprägnieren, aber vor der Vernetzung durch UV-Bestrahlung. Es hat sich gezeigt, dass nach der Bestrahlung die Haftung der Druckfarben unbefriedigend ist. Als Druckverfahren kommen in erster Linie Offsetdruck, Flexodruck und digitale Verfahren, wie Tintenstrahl-, Transfer- oder Laserdruck infrage.
Besonders bevorzugt ist dabei ein digitales Druckverfahren, weil dabei nicht mit einer vorgefertigten Druckform gearbeitet wird, deren Muster sich regelmäßig wiederholt. Wegen dieser Wiederholungen gelingt die Imitation natürlicher Werkstoffe wie Holz nur unvollkommen. Es wäre unwirtschaftlich, nach jedem Druck die Druckform zu wechseln, um den Eindruck der Wiederholung zu vermeiden. Mit dem Digitaldruck ist es dagegen möglich, eine große Anzahl verschiedener Muster in digitaler Form vorrätig zu halten und ohne die sonst für den Wechsel der Druckform aufzuwendende Rüstzeiten miteinander abwechseln zu lassen. Dieser Vorteil wird auch dann nutzbar, wenn bei laufender Produktion der zu imitierende Werkstoff geändert, beispielsweise eine andere Holzart gewählt werden soll.
Vorteilhaft bei den digitalen Druckverfahren ist auch, dass sie meist berührungsfrei arbeiten. Dadurch lässt sich vermeiden, dass das imprägnierte und getrocknete, aber noch nicht mit UV bestrahlte Cellulosevlies oberflächlich beschädigt wird. Als Druckverfahren kommen beispielsweise Tintenstrahlverfahren mit feststehendem oder bewegtem Druckkopf, Laserdruckverfahren, beispielsweise mit einfarbigen oder mehrfarbigen Tonerpulvern, und Wärmeübertragungsverfahren infrage. Die Verwendung von strahlungshärtbaren Druckfarben ist vorteilhaft, weil bei der ohnehin zur Auswertung der Imprägnierung notwendigen UV-Bestrahlung eine intensive Verbindung der Druckfarben mit dem Imprägniermittel im Vlies erfolgt. Erfindungsgemäß geeignet sind aber auch andere Druckfarben, beispielsweise auf Wasser- oder Lösemittelbasis.
Zur Erzeugung spezieller visueller Effekte ist es auch möglich, das Dekor in zwei Arbeitsgängen, d.h. vor und nach dem Imprägnieren, zu drucken. Dies kann vorteilhaft sein, wenn beispielsweise metallisch reflektierende oder opaleszierende Druckfarben verwendet werden.

Zur Erfindung gehört auch die Verwendung eines erfindungsgemäß hergestellten dekorierten Blattes in einem Verfahren zur Herstellung eines dekorativen Laminats. Ein solches Verfahren umfasst zumindest den weiteren Schritt:
- Anbringen einer Deckschicht auf dem dekorierten Blatt.
Als Trägerplatte kommt jedes geeignete Material infrage, wie beispielsweise Holz, Holzwerkstoffe wie Span- und Faserplatten, Sperrholz, Platten aus duroplastischen und thermoplastischen Kunststoffen, Platten aus biologischen Fasermaterialien wie Hanffasern, Zellulosefasern (Papier, Pappe und dergleichen) oder Stroh, keramische Materialien wie gebrannter Ton, Beton, Gips sowie Verbundmaterialien aus zwei oder mehreren der genannten Stoffe, beispielsweise Gipskartonplatten oder faserverstärkte Kunststoffe. Bei Trägerplatten mit stärkeren Unebenheiten auf der Oberfläche kann es erforderlich sein, vor dem Befestigen des dekorierten Blattes eine Grundierungs-Schicht zum Ausgleich dieser Unebenheiten anzubringen. Zum Befestigen des dekorierten Blattes auf der Trägerplatte wird vorzugsweise ein Klebstoff oder Leim verwendet. Beispiele sind Heißkleber, Dispersionskleber, ZweikomponentenKleber, Harnstoff-Formaldehydleim, gegebenenfalls mit einem Härter. Soweit notwendig oder vorteilhaft, kann die Wirkung des Klebstoffes oder Leims durch Anwendung von Druck und/oder Wärme verstärkt werden.

Zum Schutz des Dekors wird eine Deckschicht auf dem auf der Trägerplatte befestigten dekorierten Blatt angebracht. Hierzu eignen sich alle im Stand der Technik bekannten Materialien und Verfahren. Beispielsweise kann ein so genanntes Overlay verwendet werden, das gewöhnlich aus einem mit einem Kunstharz, beispielsweise einem Aminoplast, getränkten Cellulosevlies besteht. Andererseits ist es auch möglich, eine cellulosefreie Deckschicht aufzutragen, beispielsweise indem man eine wässrige Lösung eines Aminoplastes oder einer Aminoplastvorstufe auf die Dekorschicht aufträgt und trocknet. Es ist auch möglich, ein Pulver eines Kunstharzes oder einer Harzvorstufe auf das dekorierte Blatt aufzustreuen und durch zumindest teilweise Schmelzen eine zusammenhängende Schicht zu erzeugen. Die Deckschicht kann auch aus gegebenenfalls strahlungshärtbaren Lacken gebildet werden. In diesem Fall kann die Deckschicht durch Bestrahlung ihre Endhärte erhalten. In die Deckschicht können Verschleiß mindernde Bestandteile inkorporiert werden, beispielsweise harte Teilchen aus Korund, Siliziumkarbid, Glas und dergleichen.
Bevorzugt besteht die Deckschicht aus einem Aminoplastharz oder einer Vorstufe dazu, beispielsweise einem Oligomer aus einer Amino- und einer Aldehydverbindung, wie Melamin bzw. Formaldehyd. Um die Endhärte zu erreichen, muss dieses Material noch einer Wärmebehandlung unterzogen werden, die zweckmäßig unter Druck erfolgt. Hierzu wird bevorzugt das ganze Schichtpaket, umfassend Trägerplatte, dekoriertes Blatt und Deckschicht, gepresst und/oder erhitzt. Dies kann beispielsweise in einer so genannten Kurztaktpresse oder auch kontinuierlich in einer Doppelbandpresse erfolgen. Vor dem Pressen oder während des Pressens kann, beispielsweise mittels eines geeigneten Prägeblechs, eine Oberflächenstruktur, beispielsweise zur Imitation von Holzporen, in die Oberfläche der Deckschicht eingeprägt werden.

Nachstehend wird ein nicht erfindungsgemäßes Ausführungsbeispiel eines Verfahrens zur Herstellung eines dekorierten Blattes beschrieben.
Eine Papierbahn mit einem Flächengewicht von 80 g/m² wird durch ein Walzenpaar geführt, bei dem beide Walzen mittels einer Rakelvorrichtung mit je 20 g/m² einer Dispersion eines Urethan-Acryllack-Ester-Copolymers mit 50 Gewichtsprozent Feststoffanteil beschichtet werden. Beim Zusammentreffen mit dem Papier wird die Dispersion in das Papier eingepresst. Nach dem Auftragen wird die Papierbahn durch einen Trockner geleitet, in dem die Bahn mit Infrarot bestrahlt und belüftet wird. Nach Passieren des Trockners durchläuft die Bahn eine Druckstation, in der ein vierfarbiges Dekor mittels eines digitalen Tintenstrahldruckverfahrens auf eine Seite der Bahn aufgedruckt wird. Danach wird die Bahn von beiden Seiten einer UV-Bestrahlung unterworfen. Das so erzeugte dekorierte Blatt ist nun wasserfest und kann aufgewickelt und gelagert werden. Alternativ kann es auch sofort, gegebenenfalls in kontinuierlichem Betrieb, mit einer HDF-Platte unter Verwendung eines Harnstoff-Formaldehyd-Leims verleimt werden. Auch in diesem Zustand kann das Zwischenprodukt, das heißt die Trägerplatte mit dem darauf befestigten dekorierten Blatt, gegebenenfalls bis zur weiteren Verwendung gelagert werden. Zur Fertigstellung eines dekorativen Laminats wird nun noch eine wässrige Lösung einer Melamin-Formaldehyd-Harzvorstufe auf die dekorierte Oberfläche aufgetragen, getrocknet, und in einer Kurztaktpresse bei etwa 170 °C 20 s lang gepresst. Dabei wird mittels eines Prägeblechs eine mit dem Dekor synchrone Porenstruktur in die Oberfläche eingeprägt. Die Erfindung wird anhand von einem in den beigefügten Figuren dargestellten Ausführungsbeispiel im Folgenden näher beschrieben. Es zeigen
Figur 1 eine erste Ausführungsform eines Verfahrens mit einem unbedruckten Zellulosevlies,
Figur 2 eine zweite Ausführungsform eines Verfahrens mit einem bereits bedruckten Dekorpapier.

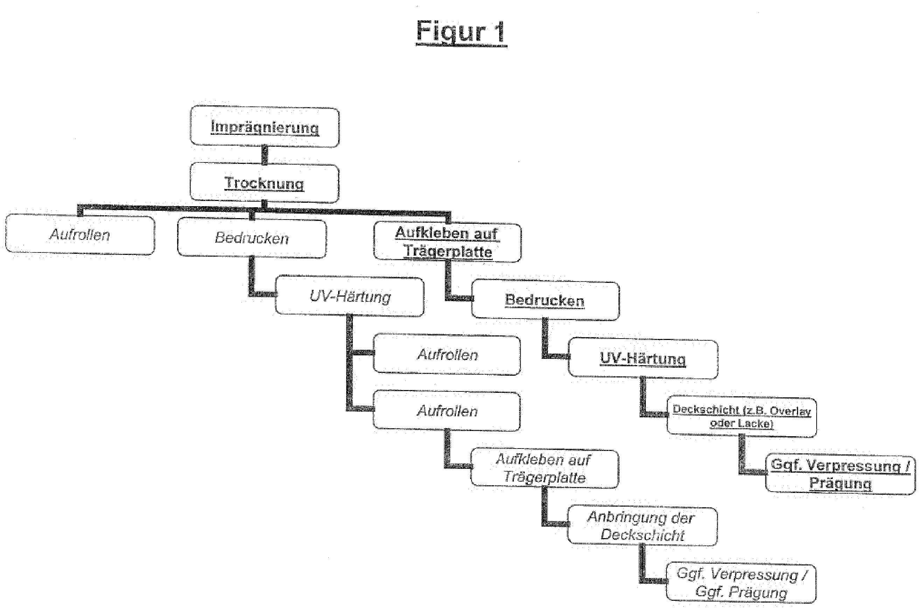

In Figur 1 sind die aufeinanderfolgenden Schritte bei einer beispielhaften Ausführungsform des erfindungsgemäßen Verfahrens dargestellt. Dabei stellen die unterstrichenen Bezeichnungen einen erfindungsgemäßen Verfahrensablauf dar, der die Erfindung besonders vorteilhaft nutzbar macht. Zunächst wird das Cellulosevlies, das zum Beispiel ein unbedrucktes Papier, insbesondere ein Druckbasispapier, sein kann, mit dem erfindungsgemäßen Imprägniermittel imprägniert. Danach wird das imprägnierte Cellulosevlies getrocknet. Nun wird das Vlies auf eine Trägerplatte aufgeklebt und mittels eines bevorzugt digitalen Druckverfahrens mit einem dekorativen Muster bedruckt. An diesen Schritt schließt sich eine UV-Bestrahlung an, bis die Imprägnierung hinreichend ausgehärtet ist. Nun kann eine Deckschicht, beispielsweise ein Overlay (mit Deckschichtmaterial imprägnierte Trägerschicht), eine Lösung einer Harzvorstufe oder auch ein gegebenenfalls strahlungshärtbarer Lack, auf dem dekorativen Muster angebracht werden. Die Deckschicht wird schließlich mit der Trägerplatte und der Dekorschicht in einer beheizbaren Presse unter Druck und/oder Wärme verbunden, wobei gegebenenfalls noch mit einem strukturierten Pressblech eine Oberflächenstruktur in die Oberfläche der Deckschicht eingeprägt wird. Bei diesem bevorzugten Verfahrensablauf kann sich ein Verfahrensschritt unmittelbar an den anderen anschließen, so dass kontinuierlich gearbeitet werden kann, was bei großen Losen beträchtliche Kostenvorteile ermöglicht. Andererseits kann man das imprägnierte und getrocknete Cellulosevlies in insbesondere nicht erfindungsgemäßer Weise aufrollen und zwischenlagern, bevor man es bedruckt, mit UV bestrahlt, auf die Trägerplatte aufklebt und gegebenenfalls die Deckschicht anbringt und den Schichtverbund presst und prägt. Hierbei ist es vorteilhaft, dass auch nach dem Bedrucken und der UV-Bestrahlung das Dekormaterial noch aufgerollt und gelagert werden kann. Dies erleichtert beispielsweise die Fertigung von kleinen Losen mit häufigeren Produktwechseln. Es ist auch möglich, den Fertigungsprozess nach dem Aufkleben der Dekorschicht auf die Trägerplatte zu unterbrechen und das Zwischenprodukt zu lagern.

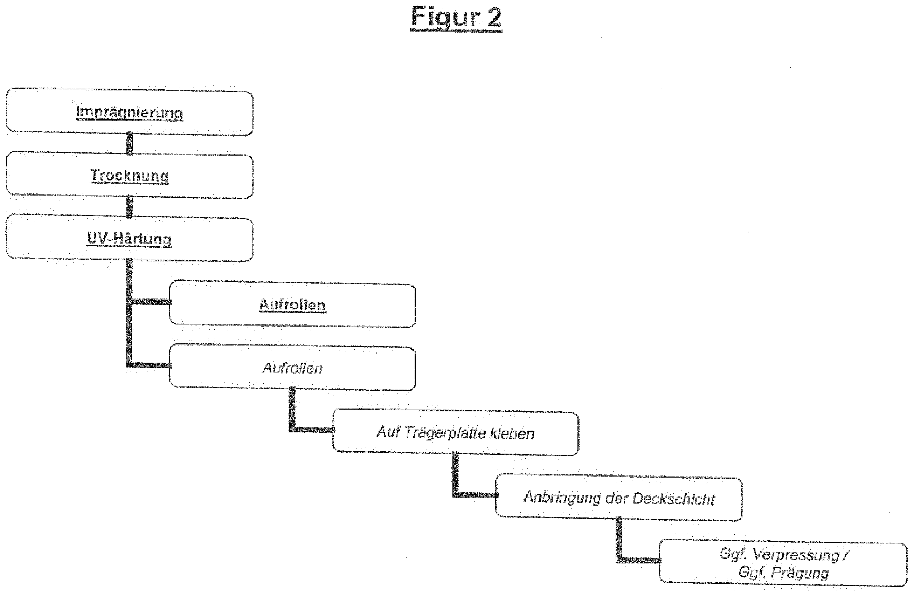

In Figur 2 ist eine Ausführungsform eines insbesondere nicht erfindungsgemäßen Verfahrens beispielhaft dargestellt. Hier geht man von bereits bedrucktem Dekorpapier aus. Dieses wird zunächst mit dem Imprägniermittel imprägniert, getrocknet und der UV-Bestrahlung unterzogen. Bevorzugt (unterstrichene Verfahrens schritte) wird es nun aufgerollt und zur weiteren Verwendung zwischengelagert. Es kann aber auch sofort oder nach Zwischenlagerung auf eine Trägerplatte geklebt und eine Deckschicht, beispielsweise wie oben beschrieben, angebracht werden. Das Schichtpaket kann nun wiederum mit Druck und/oder Wärme behandelt werden, wobei gegebenenfalls auch eine Struktur in die Oberfläche eingeprägt wird.

## Patentansprüche

1. Verfahren zur Herstellung eines dekorierten Blattes, umfassend die Schritte
- Bereitstellung eines unbedruckten Vliesstoffes aus Zellulosefasern,
- Imprägnieren des Vliesstoffs mit einer wässrigen Dispersion eines durch UV-Strahlung vernetzbaren Polymers,
- Entfernen des wässrigen Dispersionsmediums aus dem imprägnierten Vliesstoff durch Trocknung,
- Aufkleben des getrockneten imprägnierten Vliesstoffs auf eine Trägerplatte,
- Drucken eines Dekors auf eine Seite des getrockneten imprägnierten Vliesstoffs,
- Härten des Polymers im Vliesstoff durch Vernetzung mittels UV-Bestrahlung,
so dass der getrocknete imprägnierte Vliesstoff auf der Trägerplatte befestigt wird vor dem Drucken des Dekors, und das Dekor auf den imprägnierten und getrockneten Vliesstoff gedruckt wird vor dem Härten des Polymers im Vliesstoff durch Vernetzen mittels UV-Bestrahlung.

2. Verfahren nach Anspruch 1, **dadurch gekennzeichnet, dass** das durch UV-Strahlung vernetzbare Polymer ein Copolymer ist, das zumindest Urethan- und ethylenisch ungesättigte Einheiten aufweist.

3. Verfahren nach Anspruch 2, **dadurch gekennzeichnet, dass** das durch UV-Strahlung vernetzbare Polymer zusätzlich Estereinheiten aufweist.

4. Verfahren nach einem der vorangehenden Ansprüche, **dadurch gekennzeichnet, dass** als Vliesstoff ein unbedrucktes Papier verwendet wird.

5. Verfahren nach einem der vorangehenden Ansprüche, **dadurch gekennzeichnet, dass** die wässrige Dispersion einen Feststoffgehalt von mindestens 35 Gewichtsprozent hat.

6. Verfahren nach einem der vorangehenden Ansprüche, **dadurch gekennzeichnet, dass** die Trocknung durch Infrarotbestrahlung, erwärmte Luft, Mikrowellen und/oder beheizte Walzen erfolgt.

7. Verfahren nach einem der vorangehenden Ansprüche, **dadurch gekennzeichnet, dass** das Bedrucken mittels Offsetdruck/ Flexodruck und/oder eines digitalen Druckverfahrens erfolgt.

8. Verfahren nach Anspruch 7, **dadurch gekennzeichnet, dass** das Bedrucken mittels eines Tintenstrahl-, Transfer- oder Laserdruckverfahrens erfolgt.

9. Verwendung eines nach einem der Ansprüche 1 bis 8 hergestellten dekorierten Blattes in einem Verfahren zur Herstellung eines dekorativen Laminats, umfassend den Schritt
- Anbringen einer Deckschicht auf dem dekorierten Blatt.

10. Verwendung nach Anspruch 9, **dadurch gekennzeichnet, dass** nach dem Anbringen der Deckschicht das Schichtpaket gepresst und/oder erhitzt und/oder die Oberfläche der Deckschicht geprägt wird.

## Claims

1. Method for producing a decorated sheet comprising the steps of
- providing an unprinted nonwoven fabric made of cellulose fibers;
- impregnating the nonwoven fabric with an aqueous dispersion of a polymer crosslinkable by UV radiation;
- removing the aqueous dispersion medium from the impregnated nonwoven fabric by drying;
- adhering the dried impregnated nonwoven fabric onto a carrier plate;
- printing a decoration onto a side of the dried impregnated nonwoven fabric;
- curing the polymer in the nonwoven fabric by crosslinking by means of UV irradiation, so that the dried impregnated nonwoven fabric is fixed on the carrier plate prior to the printing of the decoration and the decoration is printed onto the impregnated and dried nonwoven fabric prior to the curing of the polymer in the nonwoven fabric by crosslinking by means of UV irradiation.

2. Method according to claim 1, **characterized in that** the polymer which is crosslinkable by UV radiation is a copolymer which comprises at least urethane and ethylenically unsaturated units.

3. Method according to claim 2, **characterized in that** the polymer which is crosslinkable by UV radiation additionally comprises ester units.

4. Method according to any one of the preceding claims, **characterized in that** an unprinted paper is used as the nonwoven fabric.

5. Method according to any one of the preceding claims, **characterized in that** the aqueous dispersion has a solids content of at least 35% by weight.

6. Method according to any one of the preceding claims, **characterized in that** the drying process is carried out by means of infrared radiation, heated air, microwaves and/or heated rollers.

7. Method according to any one of the preceding claims, **characterized in that** the printing process is carried out by means of offset printing/flexographic printing and/or a digital printing method.

8. Method according to claim 7, **characterized in that** the printing process is carried out by means of an inkjet, transfer or laser printing process.

9. Use of a decorated sheet produced according to any one of claims 1 to 8 in a method for producing of a decorative laminate comprising the step of
- applying a top layer onto the decorated sheet.

10. Use according to claim 9, **characterized in that** after the application of the top layer the laminate is pressed and/or heated and/or the surface of the top layer is embossed.

## Revendications

1. Procédé de fabrication d'une feuille décorative comprenant les étapes
- de mise au point d'un non tissé sans impression à base de fibres de cellulose,
- d'imprégnation du non tissé avec une dispersion aqueuse à base d'un polymère pouvant être réticulé par rayonnement UV,
- de retrait à partir du milieu de dispersion aqueux du non tissé imprégné par un séchage,
- de collage du non tissé imprégné sec sur une plaque support,
- d'impression d'un décor sur une face du non tissé imprégné sec,
- de durcissement du polymère dans le non tissé par une réticulation au moyen d'un rayonnement UV de sorte que le non tissé imprégné sec est fixé sur la plaque support avant l'impression du décor, et le décor est imprimé sur le non tissé imprégné et sec avant le durcissement du polymère dans le non tissé par la réticulation au moyen du rayonnement UV.

2. Procédé selon la revendication 1, **caractérisé en ce que** le polymère pouvant être réticulé par un rayonnement UV est un copolymère qui présente au moins des unités uréthane et éthyléniques insaturées.

3. Procédé selon la revendication 2, **caractérisé en ce que** le polymère pouvant être réticulé par un rayonnement UV présente en outre des unités esters.

4. Procédé selon l'une des revendications précédentes, **caractérisé en ce qu'**en tant que non tissé, on emploie un papier sans impression.

5. Procédé selon l'une des revendications précédentes, **caractérisé en ce que** la dispersion aqueuse a une teneur en matières solides d'au moins 35 pourcents en poids.

6. Procédé selon l'une des revendications précédentes, **caractérisé en ce que** le séchage a lieu par un rayonnement infrarouge, de l'air réchauffé, des micro-ondes et/ou des rouleaux chauffés.

7. Procédé selon l'une des revendications précédentes, **caractérisé en ce que** l'impression est effectuée par une impression par offset/impression par flexographie et/ou un procédé d'impression numérique.

8. Procédé selon la revendication 7, **caractérisé en ce que** l'impression a lieu au moyen d'un procédé par jet d'encre, de transfert ou d'impression laser.

9. Utilisation d'une feuille décorative fabriquée selon l'une des revendications 1 à 8 dans un procédé destiné à la fabrication d'un stratifié décoratif, comprenant l'étape
- d'apport d'une couche de couverture sur la feuille décorative.

10. Utilisation selon la revendication 9, **caractérisée en ce qu'**après l'apport de la couche de couverture, le paquet en couches est comprimé et/ou chauffé et/ou la surface de la couche de couverture est mise en forme.
